# EUROPEAN PATENT APPLICATION

(11) **EP 1 324 609 A1**
(43) Date of publication of application: **02.07.2003**
(21) Application number: 01951929.7
(22) Date of filing: 19.07.2001
(51) Int. Cl.: H04N 7/173

(54) **INFORMATION ACCESSING DEVICE AND METHOD AND INFORMATION PROVIDING DEVICE AND METHOD**

(30) Priority: 27.07.2000 JP 2000227883
(71) Applicant: Kabushiki Kaisha Infocity, Tokyo 150-0002 (JP)
(72) Inventor: YAMAMOTO, Isshue, Kabushiki Kaisha Infocity, Tokyo 150-0002 (JP)
(74) Representative: Goddar, Heinz J., Dr.
(86) International application number: JP0106267
(87) International publication number: WO02011448

(57) **Abstract**

A data provision apparatus enabling users to browse previously viewed broadcast content or related content. While viewing a television broadcast on a TV receiver, the user pushes a button labeled "Mark" on the remote controller to clip content. As a result, a request to "clip" content including program and user identifiers is transmitted via a network to a server at a "clipping center." The program identifier is recorded under the user identifier in a user database. Subsequently, the user can browse recorded content by pushing an "Information" button on a cellular phone or the like to transmit a browsing request to the server at the clipping center. The server references program content recorded under the corresponding user identifier to generate a menu of the content that is transmitted back to the cellular phone. By selecting content in the menu displayed on the cellular phone, the user can send a transmission request to the clipping server and view the broadcast content returned in response to this request.

## Description

### TECHNICAL FIELD

The present invention relates to a data access or data provision technology that allows a user to access content of a broadcasting service or related content via a network.

### BACKGROUND ART

Today we can use a client apparatus to access and browse various web pages stored on a web server connected to the Internet. This client apparatus is not restricted to a fixed data terminal. For example, it is now possible to connect to the Internet and access web pages using a mobile station for mobile communications, such as a portable telephone or a car navigation system.

We are now beginning to distribute content using terrestrial analog broadcasting, digital broadcasting via satellite, and the like. It has also become possible to convert a universal data structure that can be used when creating this content, such as XML (Extensible Markup Language), for various media including portable telephones and car navigation systems. Accordingly, there is hope that we can merge content from broadcast services with content on networks. For example, it is desirable to be able to access broadcast content or related content via the Internet in order to browse such content at a later time using a data terminal, portable telephone, car navigation system, or the like.

However, even if the original content is related to the broadcast service, as long as the user is browsing content via the Internet, the user must either use a search engine on the Internet or specify an address using a URL or the like advertised during the broadcast in order to access that content. Conventionally, data that has been sent by broadcast services cannot be used effectively, making it necessary to merge broadcast services and communication services.

### DISCLOSURE OF THE INVENTION

In view of the foregoing, it is an object of the present invention to provide a technology for seamlessly merging program data that is broadcast by a broadcast service in the form of radio waves, CATV, or the like with content on a communication network, such as the Internet, and to enable users to access broadcast data and related data without the need for conducting searches or inputting addresses.

These objects and others will be attained according to the present invention employing the configurations described in the attached claims. These configurations are described in more detail below.

In the detailed configuration of the present invention, broadcast content includes an identifier for uniquely identifying that content. When a user viewing a broadcast desires data related to that broadcast, the user submits a request to accumulate the data by a clicking a mouse, pushing a button on a television remote control, or the like. As a result of this action, a content identifier and user identifier for the user requesting data accumulation are transmitted to the server via a network. The content identifier is stored in a virtual directory uniquely determined by the user identifier. Broadcast content is accumulated in advance or when a request is received from the user. When the user sends a request to browse data, a content identifier is extracted based on the user identifier and data is supplied to the user based on the content identifier. This data is converted to a format compatible with the user' s mobile communication terminal or other terminal that can be connected to the Internet. Such conversion can be executed at the time a browsing request is received or in advance.

These objects and others are achieved by a data access apparatus comprising means for receiving a broadcast signal; means for playing broadcast content included in the broadcast signal; means for transmitting an association request, including user-specifying data and content-specifying data specifying the broadcast content or content related to the broadcast content and requesting that the content specified by the content-specifying data be associated to a user account identified by the user-specifying data, to a prescribed transmission destination ; and means for requesting the transmission of content associated with a user account specified by the user-specifying data.

With this configuration, broadcast content or the like can be associated with a user account. Subsequently, desired data can be extracted by specifying the user account.

One or a plurality of user accounts can be assigned for each user. Users may also acquire separate accounts for different terminals or different objectives. These terminals could include a portable telephone, car navigation system, or normal data terminal. To associate broadcast content or the like with a user account, a content identifier assigned to the broadcast content or the like is recorded in the user account.

User-specifying data provided in an association request can be a user ID, a subscriber number for a portable telephone or other user apparatus, one including a sub address or control code added to a subscriber number, an IP address, a MAC address or other number physically recorded in the communication device, or the like. Subscriber numbers can be provided by a caller ID service. When making an association request on a subscriber network, at least part of the user-specifying data and content-specifying data is transmitted with a call setup message. One user account can be associated with one or more user-specifying data. It is also possible to treat a plurality of user accounts in the same way using one user-specifying data (recording data simultaneously in a plurality of user accounts). User accounts may not necessarily be managed as a "user account" on the system. For example, user accounts can be managed as user IDs or other user-specifying data.

Content identifying data in an association request can be a content identifier or a content broadcast time and channel. The broadcast time can be sent to the broadcast signal receiving site with the broadcast signal from the broadcast site, or can be kept by a clock at the receiving site or at the content managing site. When using a clock at the content receiving site or the content managing site, it is desirable to synchronize this clock with the clock on the broadcast end. If the clock on the content managing site is keeping time of when an association request is received and treating this time as the content broadcasting time, there is no need to send time data as content-specifying data.

When a broadcast station site transmits the broadcast time to the broadcast signal receiving site, the broadcast time can be sent along with the content or sent as part of the content. When sending identifying data along with the content, the data can be described as an element accompanying the body of the content as set forth in Japanese unexamined patent application publication No. HEI-10-51752, for example. When sending the time data as part of the content, the data can be sent using a tag in XML or a metatag in HTML.

Broadcast signals may be either for a television or radio broadcast and may be either digital or analog. The transmission channel can be broadcast on land, via satellite, or via cable.

An example of broadcast content is Broadcast Markup Language (BML) content. Examples of related content are HTML documents and data (telephone numbers, maps, URLS, etc.) describing sound and video data in the broadcast content.

Association requests can be sent using TCP/IP protocol or a normal telephone protocol. When a request is sent using TCP/IP protocol, various applications for HTTP or the like can be used. The communication network can be the Internet, a private IP network, or a packet network or the like provided by a company operating a communication network. When using a telephone, MFT (multifrequency tone) signals or the like are used as control signals. CTI (computer telephony integration) may also be used.

An association request can be made using a device for receiving broadcast signals (including a data terminal with a receiving function), a remote controller for this device, a fixed telephone, a portable telephone, or the like. A subscriber number and IP address indicate the destination address.

A request for transmitting content can be sent using TCP/IP protocol or a normal telephone protocol. When a request is sent using TCP/IP protocol, various applications for HTTP or the like can be used. The communication network can be the Internet, a private IP network, or a packet network or the like provided by a company operating a communication network. When using a telephone, MFT signals or the like are used as control signals. CTI may also be used.

According to another aspect of the present invention, a data provision apparatus comprises means for transmitting a broadcast signal including broadcast content; means for storing the broadcast content included in the broadcast signal or content related to the broadcast content in association with content-specifying data specifying the broadcast content or related content; means for receiving an association request transmitted from a user device, the association request including user-specifying data and content-specifying data and requesting that the content specified by the content-specifying data be associated to a user account identified by the user-specifying data; means for associating content specified by the content-specifying data to a user account identified by the user-specifying data based on the association request; and means for extracting content associated with a user account from the content storing means based on a content transmission request sent from a user device and transmitting the content to the user device.

With this configuration, broadcast content or the like is associated with a user account based on a request from the user. Subsequently, desired content can be acquired by specifying the user account.

This configuration can also be provided with means for determining the type of user device and for transmitting content compatible with that device. The format for content transmitted to the user device can be normal HTML, compact HTML employed by portable telephones, Mobile Markup Language (MML), Wireless Markup Language (WML), Handheld Device Markup Language (HDML), or the like. Accordingly, data can be provided in conformance to a variety of user devices, not just ordinary web terminals.

The present invention can be implemented not only as a device or system, but also as a method. Naturally, part of the invention can be configured in software. It is also obvious that the software product (recording medium) enabling the software program to be executed on a computer also falls within the technical scope of the present invention.

### BRIEF DESCRIPTION OF THE DRAWINGS

In the drawings:
Fig. 1 is a block diagram showing the overall configuration of the first embodiment;
Fig. 2 is a block diagram showing the relevant construction of the first embodiment;
Fig. 3 is an explanatory diagram showing the construction of a remote controller for a television receiver according to the first embodiment;
Fig. 4 is an explanatory diagram showing the construction of a portable telephone according to the first embodiment;
Fig. 5 is a flowchart illustrating the operations of the first embodiment;
Fig. 6 is a flowchart illustrating the operations of the first embodiment;
Fig. 7 is a flowchart illustrating the operations of the first embodiment;
Fig. 8 is a table showing the user database of the first embodiment;
Fig. 9 is a block diagram showing the relevant construction of the second embodiment;
Fig. 10 is a flowchart illustrating the operations of the second embodiment;
Fig. 11 is a flowchart illustrating the operations of the second embodiment;
Fig. 12 is a flowchart illustrating the operations of the second embodiment;
Fig. 13 is a table showing the content database of the second embodiment; and
Fig. 14 is a table showing the user database of the second embodiment.

### BEST MODE FOR CARRYING OUT THE INVENTION

Preferred embodiments of the present invention will be described while referring to the accompanying drawings. First a data provision system according to a first embodiment of the present invention will be described.

As described later in more detail, content is stored as XML documents or the like in a information content database 220 provided in a clipping center 20. The content is converted to broadcast content and transmitted by the broadcasting facility 10. While viewing broadcast programs, the user marks desired programs in the clipping center 20. The clipping center 20 records content corresponding to the marked program in association with user-specifying data. Later when the user requests to browse data, content converted to a format that conforms to specifications of the user's data terminal is supplied to the user's data terminal.

The following assumptions are made in the present embodiment. Of course, this is merely an example configuration and various other configurations are possible.
(1) A digital broadcast satellite is employed as the transmission path for broadcasting. However, the present invention can also be applied to terrestrial analog, terrestrial digital, etc.).
(2) Content to be broadcast, called "broadcast content," is described using BML and has a unique identifier. This identifier is synchronized with data in the information content database 220.
(3) The broadcast receiver can use a TCP/IP and HTTP protocol stack (for network only; nonprocedural also possible).
(4) In this example, the mobile terminal is an i-mode terminal (i-mode is a trademark of NTT Docomo).
(5) The broadcast receiver for viewing broadcasts is called a television receiver.
(6) Personal identifying data or terminal identifying data is simply called identifying data.
(7) Marking is an action of indicating a desire to acquire program data.

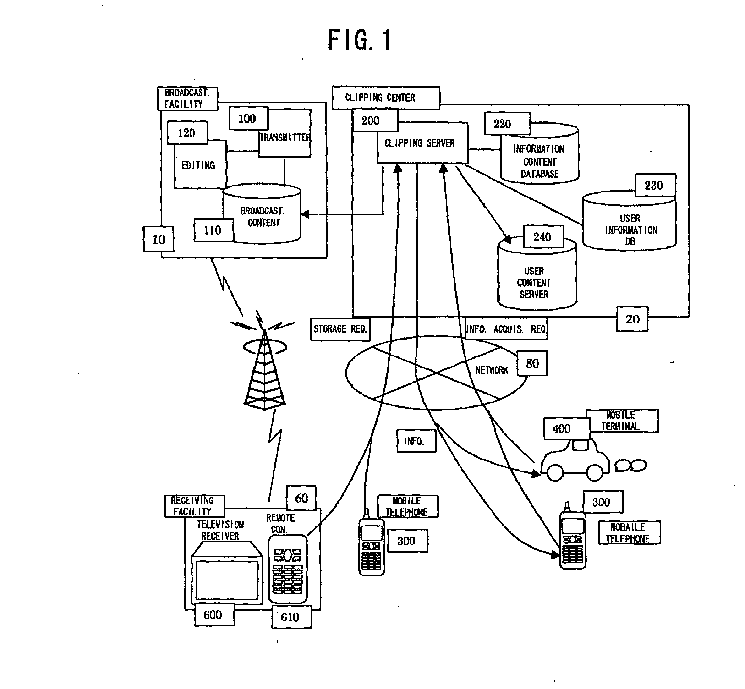

Fig. 1 shows the overall construction of the data provision system according to the first embodiment. As shown in the diagram, the data provision system includes the broadcasting facility 10 of a broadcasting station and the clipping center 20. The broadcasting facility 10 and clipping center 20 are connected to each other via a communication line 70, such as a dedicated line service, an IP network service, or a virtual LAN service. It is also possible to provide both the broadcasting facility 10 and clipping center 20 at the same site and link the two with a LAN. The broadcasting facility 10 provides a broadcast satellite digital television service. Of course the broadcasting facility 10 may also provide a ground wave broadcast, communication satellite broadcast, or cable broadcast service. The broadcast content can be in a format for television, radio, data or a combination thereof. The broadcast signal can also be in a digital or an analog form. The user (viewer) receives and plays broadcast signals using a television receiver 600 in a receiving facility 60, such as the user's home. The television receiver 600 is a set-top box, a data terminal with a television receiving function or the like. The user can mark broadcast programs in the user's own account using the clipping center 20. Subsequently, the user can access the clipping center 20 from any location using a portable terminal, such as a portable telephone 300 or car navigation system 400, and can browse the marked programs. The user can also browse programs using a fixed data terminal, such as a desktop computer (not shown), that is connected to the network.

The broadcasting facility 10 includes a broadcast signal transmitter 100, an external storage device 110 for storing broadcast content, an editing apparatus 120 for editing programs, or the like.

The clipping center 20 includes a clipping server 200, an information content database 220, a user information database 230, a user content server 240, and the like. The information content database 220 stores content described in XML, for example, while the clipping server 200 or other server converts other media to XML or the like using XSLT (Extensible Stylesheet Language Transformation), for example, enabling the use of content in other formats, such as MML, HTML, CHTML, WML, BML, and HDML. Content converted to the BML format is transferred to the broadcasting facility 10 and stored in the external storage device 110 as broadcast content. Content converted to other document formats for portable telephones and navigation systems is stored in the user content server 240.

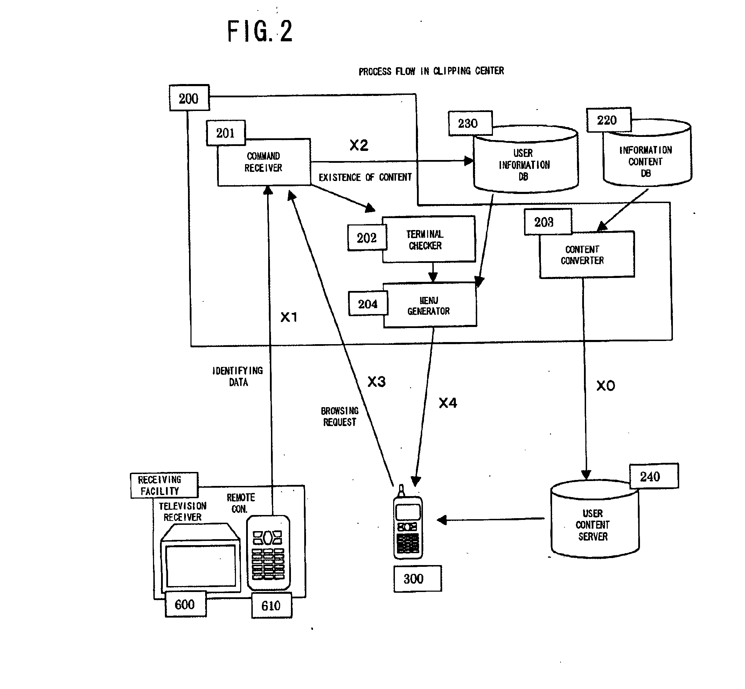

The clipping server 200 of the clipping center 20 provides a variety of services. For example, the clipping server 200 shown in Fig. 2 has a command receiver 201, a terminal checker 202, a menu generator 204, and a content converter 203.

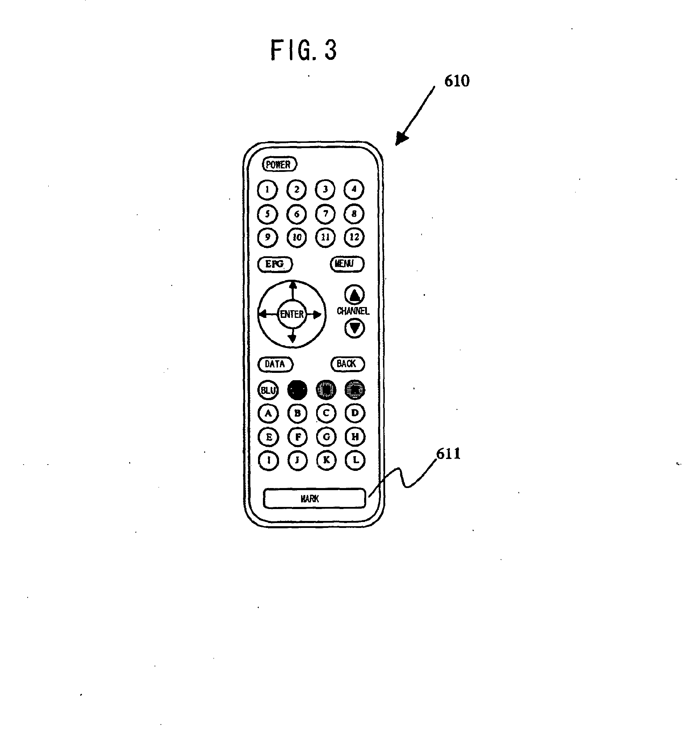

The television receiver 600 of the receiving facility 60 receives and plays broadcast signals and also has a communication function for transmitting marking requests and the like to the clipping center 20. Fig. 3 shows a remote controller 610 for controlling the television receiver 600. The remote controller 610 is equipped with keys used to control the television receiver 600 and transmits control signals to the television receiver 600 using infrared light, for example. Control signals can also be transferred to the television receiver 600 using a low-power communication channel, such as Bluetooth (trademark). The remote controller 610 has a Mark button 611 for marking content. When the Mark button 611 is pressed, prescribed control signals are transmitted to the television receiver 600, causing the transmitter of the television receiver 600 to send a mark request to the clipping center 20. The remote controller 610 can have a communication function for transmitting a mark request or the like to the clipping center 20. The mark request is transmitted to the command receiver 201 via a network 80. The request is transmitted according to HTTP protocol on a TCP/IP connection, for example. The network 80 differs according to what type of public network the clipping center 20 is connected to. The network 80 may be a packet-switching network provided by a company managing mobile communications, a telephone network for mobile or fixed communications, the Internet, or a private communication network.

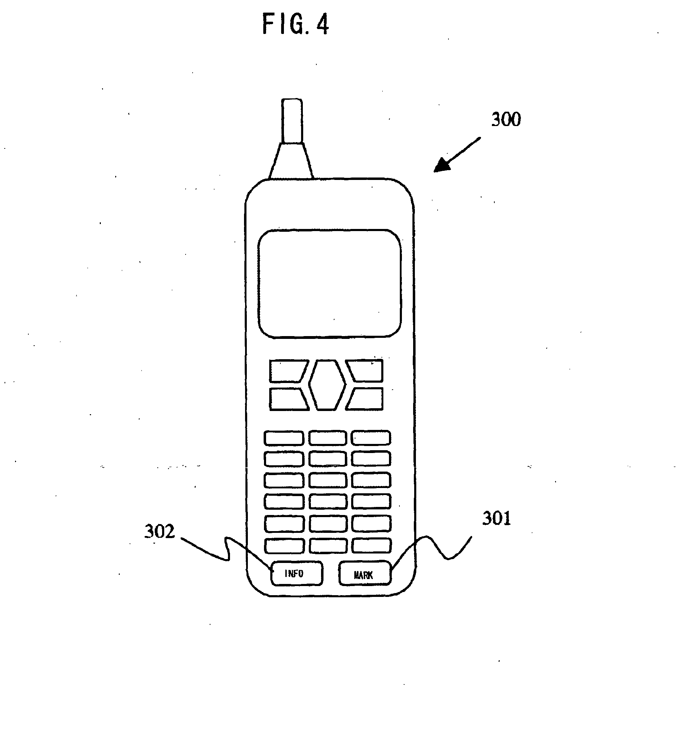

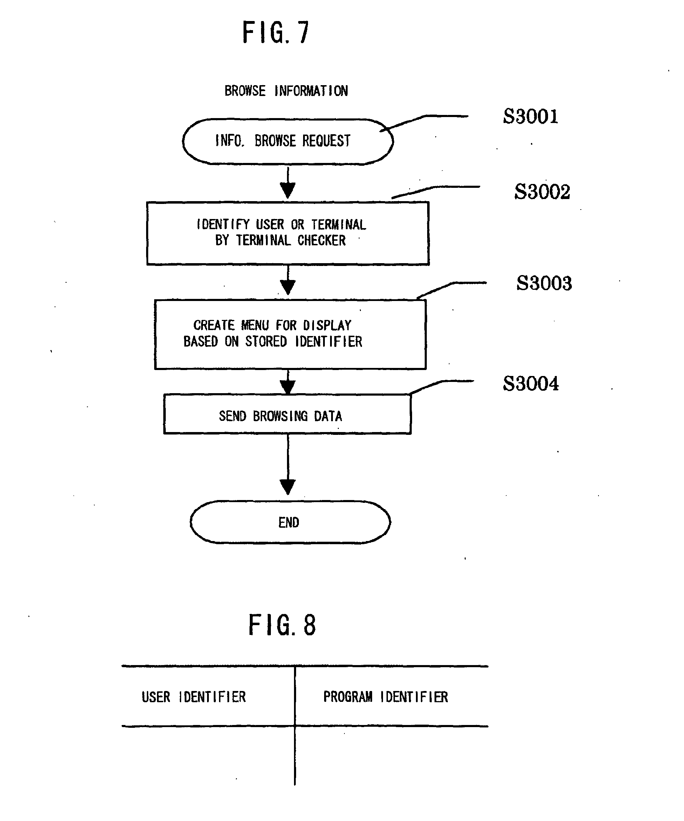

The portable telephone 300 and car navigation system 400 can be connected to the clipping center 20 via the network 80. As shown in Fig. 4, the portable telephone 300 includes an Information button 302 for requesting data browsing. When the Information button 302 is manipulated, a request for data browsing is sent to the clipping center 20, enabling the user to browse prescribed data. This operation will be described later with reference to Fig. 7. The car navigation system 400 can also be provided with a similar button to request information browsing. Of course it is also possible to display a menu that enables the user to send requests. The portable telephone 300 in Fig. 4 can also be provided with a Mark button 301 for marking data.

Next, the operations of the present embodiment will be described.

First, the operations of the embodiment will be described while referring to Fig. 2. Content for a broadcast is extracted from the information content database 220 and transmitted to the broadcasting facility 10 (Fig. 1). At this time, the content is converted to a portable terminal format or the like by the content converter 203 and stored in the user content server 240 (X0 in Fig. 2). The user (viewer) views the television broadcast using the television receiver 600 in the receiving facility 60. The user presses the Mark button 611 (Fig. 3) on the remote controller 610 to mark desired television programs. When the user presses the Mark button 611, the television receiver 600 connects to the clipping server 200 by TCP/IP and transmits identifying data and a program identifier to the clipping server 200 using HTTP (X1). An account (entry) is provided for each user or user terminal in the user database 230. Hence, identifying data including a program identifier is transmitted when the user performs a marking operation. At this time, the program identifier is recorded in the account corresponding to the identifying data (X2). Data such as that shown in Fig. 8 is stored for each marking operation in the user database 230. The user identifier in Fig. 8 is the personal identifying data (also called personal identifier) or terminal identifying data (also called terminal identifier). Next, a browsing request is sent to the clipping server 200 by the user using the portable telephone 300 and is received by the command receiver 201 (X3). In response, a menu display and content are transmitted to the portable telephone 300 from the clipping server 200 (X4). The terminal checker 202 determines the type of terminal used by the user and transmits a menu and content compatible with this terminal type.

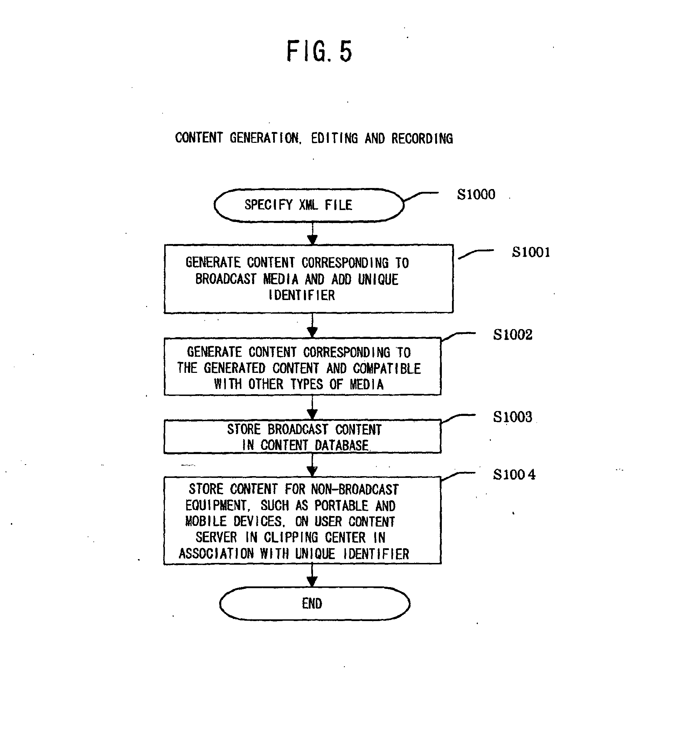

Fig. 5 shows operations for generating and editing content. In S1000 of Fig. 5, the content converter 203 extracts an XML file from the information content database 220 and, in S1001, generates broadcast content and assigns an identifier uniquely identifying the program in the broadcast content. In S1002, the content converter 203 generates content compatible with other media. In S1003, the generated broadcast content is stored in the external storage device 110 (broadcast content database). In S1004, content for each terminal (portable telephone, mobile communication terminal, etc.) is stored in the user content server 240 in association with the identifier uniquely identifying the program.

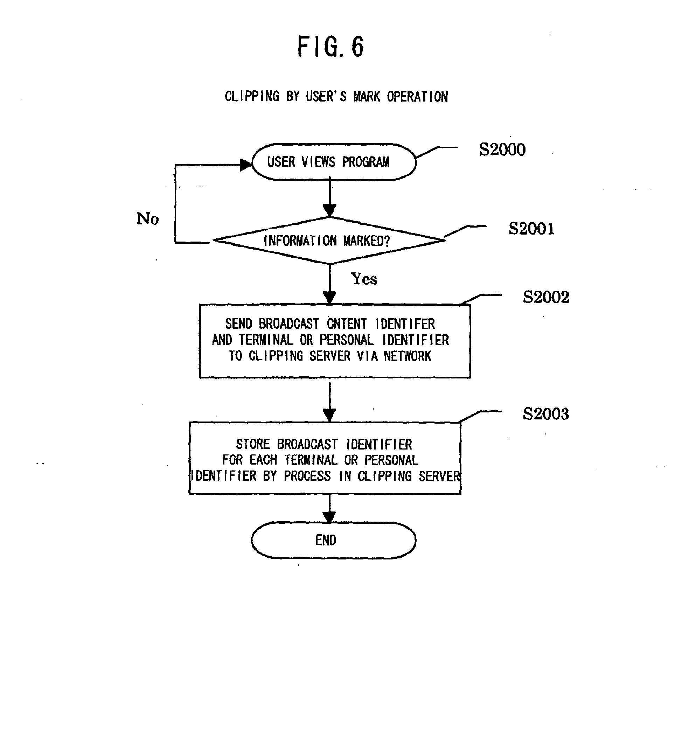

Fig. 6 shows the operations conducted when the viewer executes a marking operation. In S2000 of Fig. 6, the viewer is watching a program on the television receiver 600 shown in Fig. 2. When the viewer wishes to obtain program data, the viewer presses the Mark button 611 on the remote controller 610 (Fig. 3) or the Mark button 301 on the portable telephone 300 (Fig. 4) in S2001. In S2002, a command is sent to the command receiver 201 to mark program data for the current program. The command receiver 201 receives an identifier for identifying the user (also called a user identifier, personal identifier, or terminal identifier) and an identifier specifying the program content (also called a program identifier or content identifier) that are sent with the marking request and stores these identifiers in the user database 230 according to a format such as that shown in Fig. 8. In this way, program identifiers are stored for each user in S2003.

Fig. 7 shows operations performed when browsing marked programs. As shown in Fig. 7, a user wishing to browse specified program data from a portable telephone or the like transmits a command for requesting a display to the command receiver 201 in S3001 by pressing either the Information button 302 of the portable telephone 300 (Fig. 4) or a similar button (not shown) in the remote controller 610 (Fig. 3). After the command receiver 201 receives the command, the terminal checker 202 extracts in S3002 data indicating the type of terminal that generated the command and an identifier identifying either the user or the terminal. In S3003, the menu generator 204 creates a menu displaying a list of data marked by the user from user data stored in the user database 230. The menu generator 204 transmits this menu to the portable telephone 300 or the television receiver 600 via the network 80. In S3004, the user can select desired content from the displayed menu and view the desired data. The user identifier (personal identifier, terminal identifier) can be inputted and transmitted explicitly from the user side (a preset user identifier can be stored and automatically transmitted) or can be included in a control message during a call placing procedure or the like.

Next, a second embodiment of the present invention will be described. In this embodiment, HTML content is generated in the editing apparatus 120 and stored in the external storage device 110 as broadcast content. A program editing/recording device 122 assigns identification data to the content. Subsequently, the content is recorded in the information content database 220 of the clipping center 20. The remaining configuration is basically the same as that in the first embodiment.

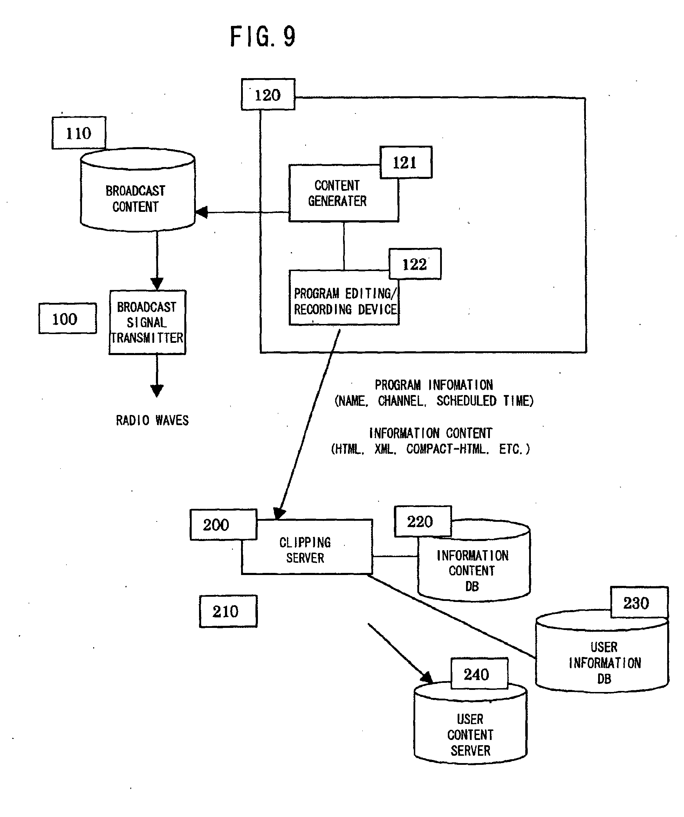

Fig. 9 shows the relevant parts of the second embodiment. As shown in the diagram, the editing apparatus 120 of the broadcasting facility 10 includes a content generator 121 and the program editing/recording device 122. The content generator 121 specifies external or internal content described in HTML and generates content for broadcasting. The program editing/recording device 122 specifies a broadcast time and channel, edits the program, and stores the edited content in the external storage device 110. The clipping server 200 in the clipping center 20 stores the content for broadcast in association with the broadcast time and channel in the information content database 220. The content in the information content database 220 is further converted to various document formats for portable telephones and car navigation systems, which are stored in the user content server 240.

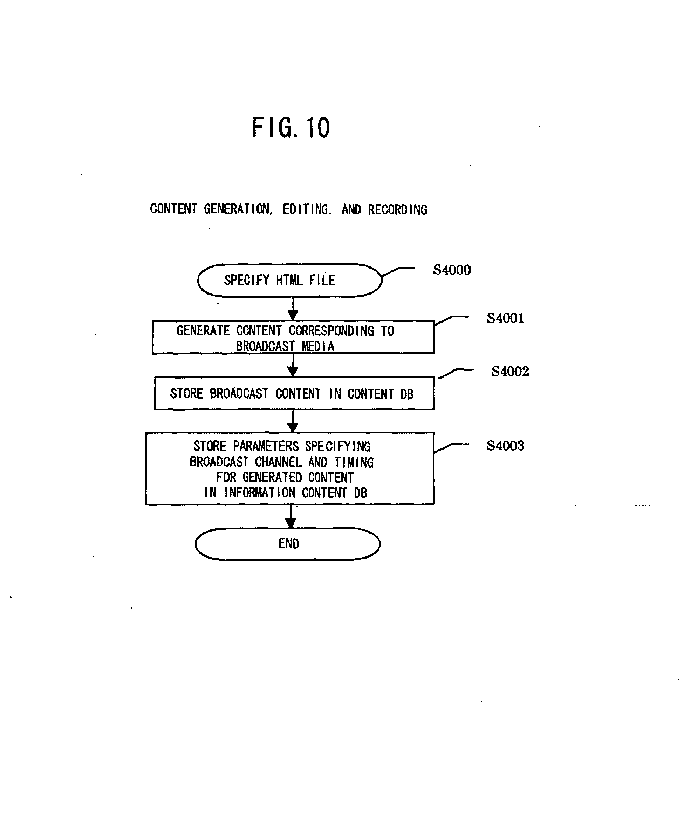

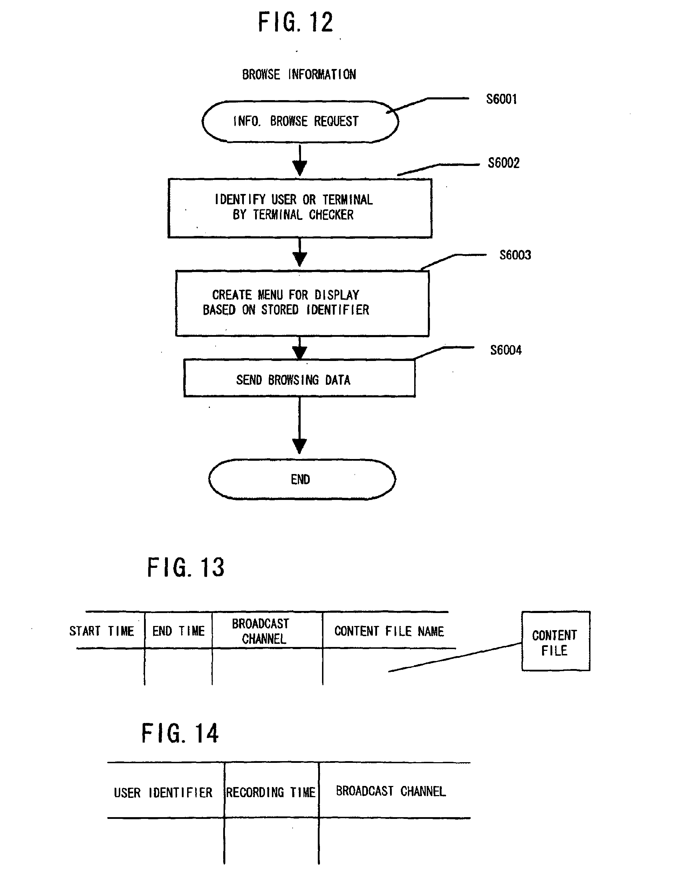

Fig. 10 shows the operations for generating, editing, and recording content. In S4000 of Fig. 10, an HTML file is specified. In S4001, the HTML file is converted to content corresponding to the broadcast medium. In S4002, the converted content is stored in the external storage device 110. Parameters specifying the time and channel for broadcasting the generated content are stored in the information content database 220 in S4003. The information content database 220 stores content and the like as shown in the example of Fig. 13.

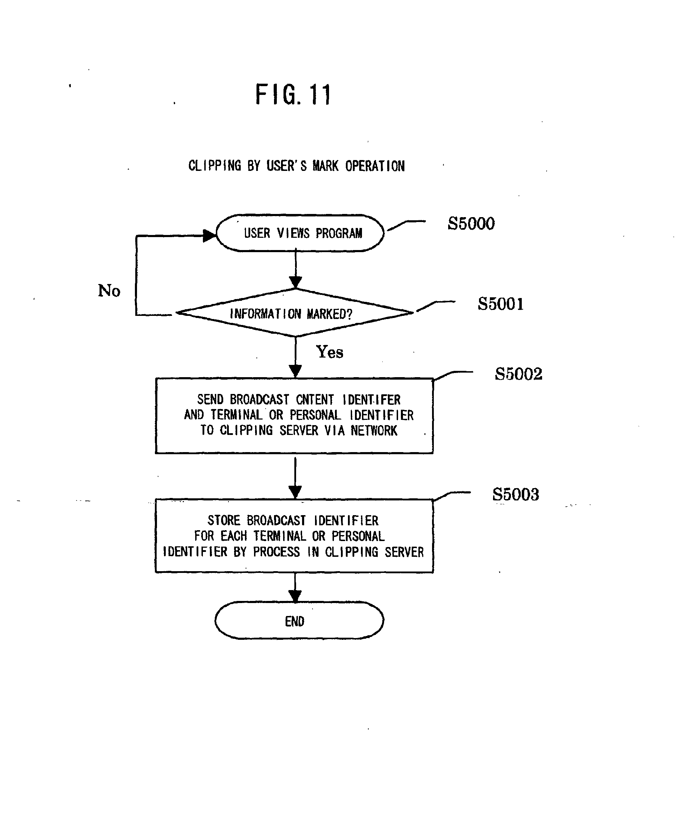

Fig. 11 shows the operations performed when a viewer executes a marking operation. In S5000 of Fig. 11, the viewer is watching a program on the television receiver 600. When the viewer wishes to obtain program data, the viewer presses the Mark button 611 in the remote controller 610 (Fig. 3) or the Mark button 301 in the portable telephone 300 (Fig. 4) in S5001. In S5002, a command is sent to the command receiver 201 to mark program data for the current program. The command receiver 201 receives an identifier for identifying the user and the broadcast time and channel that are sent with the marking request. In S5003, the broadcast times and channels of programs are stored in the user database 230 for each user, as in the example shown in Fig. 14. The broadcast time data can also be transmitted from the broadcasting facility 10. This data may be time data kept by a clock in the television receiver 600, remote controller 610, or portable telephone 300 (and may be time data taken at the time of the marking). Time data kept by the clock in the clipping center 20 (data for the time at which a marking request is received) may also be used. In the latter case, the clipping center 20 must be notified of the broadcast time.

Fig. 12 shows operations performed when browsing marked programs. As shown in Fig. 12, a user wishing to browse specified program data from a portable telephone or the like transmits a command for requesting a display to the command receiver 201 in S6001 by pressing either the Information button 302 of the portable telephone 300 (Fig. 4) or a similar button (not shown) in the remote controller 610 (Fig. 3). After the command receiver 201 receives the command, the terminal checker 202 extracts in S6002 data indicating the type of terminal that generated the command and an identifier identifying either the user or the terminal. In S6003, the menu generator 204 creates menu displaying a list of data marked by the user from user data stored in the user database 230. The menu generator 204 transmits this menu to the portable telephone 300 or the television receiver 600. In S6004, the user can select desired content from the displayed menu and view the desired data.

While the invention has been described in detail with reference to specific embodiments thereof, it would be apparent to those skilled in the art that many modifications and variations may be made therein without departing from the spirit of the invention, the scope of which is defined by the attached claims.

For example, in the embodiments described above, the command receiver 201 sends commands in conformance with a TCP/IP connection. However, marking can be conducted via a telephone call (sending control signals) using the CTI center. The clipping server can be publicly accessible on the Internet. In this case, mobile stations of a mobile communications service access the clipping service via a gateway. Normal fixed data terminals can also be used to browse data at the clipping center via the Internet. The clipping service may also be provided on a proprietary packet-switching network belonging to a company in charge of a mobile communications network. In this case, the clipping service can be provided as a special service on the packet-switching network.

The user can also input data for identifying programs (program identifiers, channels, and time data). For example, program identifiers can be displayed on a broadcast screen and inputted therein. Time data on the clipping server can be used as the time at which the server received the marking request.

In addition "Mark" and "Information" commands can be specified through the menu, instead of providing special Mark and Information buttons on the remote controller and portable telephone. These functions can be provided as a special service of a portable telephone such as i-mode, for example, wherein mark and information operations are selected from a menu. Of course, these selections can also be made in a menu provided on a normal website. Mark and Information operations can also be performed using a normal personal computer. In addition to using a normal user ID as data for identifying a user, it is also possible to use a subscriber number (phone number), IP address, MAC address, one including sub-address or control code attached to a subscriber number, or the like. When mark and information operations are executed from a fixed or portable telephone, it is possible to include user-specifying data when sending a call placing message. Another possibility is extracting the sender's membership number for use as identifying data using a caller ID service.

### INDUSTRIAL APPLICABILITY OF THE INVENTION

As described above, the present invention allows content viewed or heard during a broadcast or related content to be easily entered in an external database and subsequently extracted from any location.

## Claims

1. A data access apparatus comprising:
means for receiving a broadcast signal;
means for playing broadcast content included in the broadcast signal;
means for transmitting an association request, including user-specifying data and content-specifying data specifying the broadcast content or content related to the broadcast content, and requesting that the content specified by the content-specifying data be associated to a user account identified by the user-specifying data, to a prescribed transmission destination ; and
means for requesting the transmission of content associated with a user account specified by the user-specifying data.

2. A data access apparatus comprising:
means for transmitting an association request, including user-specifying data and content-specifying data specifying broadcast content or content related to the broadcast content, and requesting that the content specified by the content-specifying data be associated to a user account identified by the user-specifying data, to a prescribed transmission destination; and
means for requesting the transmission of content associated with a user account specified by the user-specifying data.

3. A content association requesting device for transmitting an association request, including user-specifying data and content-specifying data specifying broadcast content or content related to the broadcast content, requesting that the content specified by the content-specifying data be associated to a user account identified by the user-specifying data, to a prescribed transmission destination.

4. A content association requesting device as recited in claim 3, wherein the association request is transmitted via a subscriber network.

5. A content association requesting device as recited in claim 4, further comprising a function for performing telephone or packet communications via a subscriber network.

6. A content association requesting device as recited in claim 4 that instructs an association request to be transmitted to a communication device having a function for performing telephone or packet communications via a subscriber network, the communication device provided separately from the content association requesting device.

7. A content association requesting device as recited in claim 3, wherein the transmission destination is specified by a subscriber number.

8. A content association requesting device as recited in claim 3, wherein the transmission destination is specified by an address instruction that includes an IP address.

9. A content association requesting device as recited in claim 3, wherein the transmission destination is specified by a URL (uniform resource locator).

10. A content association requesting device comprising:
means for extracting content identifying data from a playback device that receives a broadcast signal and plays back the broadcast content included in the broadcast signal, the content identifying data identifying either the broadcast content or content related to the broadcast content; and
means for transmitting an association request, including user-specifying data and the content-specifying data, and requesting that the content specified by the content-specifying data be associated to a user account identified by the user-specifying data, to a prescribed transmission destination.

11. A content association requesting device as recited in claim 10, further comprising a function for remotely controlling the playback device.

12. A content association requesting device as recited in claim 11, wherein the playback device comprises a communication function, and the content association requesting device instructs transmission of the user-specifying data and association request to the communication function.

13. A data provision apparatus comprising:
means for transmitting a broadcast signal including broadcast content;
means for storing the broadcast content included in the broadcast signal or content related to the broadcast content in association with content-specifying data specifying the broadcast content or related content;
means for receiving an association request transmitted from a user device, the association request including user-specifying data and content-specifying data and requesting that the content specified by the content-specifying data be associated to a user account identified by the user-specifying data;
means for associating content specified by the content-specifying data to a user account identified by the user-specifying data based on the association request; and
means for extracting content associated with a user account from the content storing means based on a content transmission request sent from a user device and transmitting the content to the user device.

14. A data provision apparatus as recited in claim 13, wherein the content-specifying data is a content identifier included in the broadcast signal.

15. A data provision apparatus as recited in claim 14, wherein the content is described by XML (Extensible Markup Language), and the content identifier is marked up by a tag representing the content identifier.

16. A data provision apparatus as recited in claim 14, wherein the content is described by BML (Broadcast Markup Language), and the content identifier is marked up by a tag representing the content identifier.

17. A data provision apparatus as recited in claim 14, wherein the content is described by HTML (HyperText Markup Language), and the content identifier is marked up by metatags.

18. A data provision apparatus as recited in claim 13, wherein the content-specifying data includes at least a broadcast channel and specifies content based on the broadcast channel and prescribed time data.

19. A data provision apparatus as recited in claim 18, wherein the prescribed time data is time data managed by the user device and is included in the content-specifying data transmitted from the user device.

20. A data provision apparatus as recited in claim 18, wherein the prescribed time data is time data managed by the data provision apparatus itself, and the content-specifying data specifies content based on the broadcast channel included therein and the time data managed by the data provision apparatus itself.

21. A data provision apparatus as recited in claim 18, wherein data for the broadcast channel is acquired from a tuner device that selects the broadcast signal.

22. A data provision apparatus as recited in claim 13, further comprising means to determine the type of the user device, wherein content compatible with the user device is transmitted thereto.

23. A data provision apparatus comprising:
means for storing broadcast content included in a broadcast signal or content related to the broadcast content in association with content-specifying data specifying the broadcast content or related content;
means for receiving an association request transmitted from a user device, the association request including user-specifying data and content-specifying data and requesting that the content specified by the content-specifying data be associated to a user account identified by the user-specifying data;
means for associating content specified by the content-specifying data to a user account identified by the user-specifying data based on the association request; and
means for extracting content associated with a user account from the content storing means based on a content transmission request sent from a user device and transmitting the content to the user device.

24. A data provision apparatus comprising:
means for storing broadcast content included in a broadcast signal or content related to the broadcast content in association with content-specifying data specifying the broadcast content or related content;
means for receiving an association request transmitted from a user device, the association request including user-specifying data and content-specifying data and requesting that the content specified by the content-specifying data be associated to a user account identified by the user-specifying data;
means for associating content specified by the content-specifying data to a user account identified by the user-specifying data based on the association request;
means for determining the type of the user device; and
means for extracting content associated with a user account from the content storing means based on a content transmission request sent from a user device and transmitting the content to the user device in a format compatible with the type of the user device.

25. A data provision apparatus as recited in claim 24, wherein the content formats include HTML, compact HTML, WML, and HDML formats.

26. A data provision apparatus comprising:
means for storing broadcast content included in a broadcast signal or content related to the broadcast content in association with content-specifying data specifying the broadcast content or related content;
means for receiving an association request transmitted from a user device, the association request including user-specifying data and content-specifying data and requesting that the content specified by the content-specifying data be associated to a user account identified by the user-specifying data;
means for associating content specified by the content-specifying data to a user account identified by the user-specifying data based on the association request;
means for generating a menu of prescribed content associated with a user account corresponding to a request to transmit a content menu transmitted from the user device and for transmitting the menu to the user device; and
means for extracting content from the content storing means based on selections transmitted from the user device according to the selection instructions in the menu and transmitting the content to the user device.

27. A data provision apparatus comprising:
means for storing broadcast content included in a broadcast signal or content related to the broadcast content;
means for associating the broadcast content or related content with a user account based on content-specifying data specifying the broadcast content or related content; and
means for extracting broadcast content or related content associated with a user account from the content storing means based on a content transmission request sent from a user device and transmitting the content to the user device.

28. A data access method comprising the steps of:
receiving a broadcast signal;
playing broadcast content included in the broadcast signal;
transmitting an association request, including user-specifying data and content-specifying data, and requesting that the content specified by the content-specifying data be associated to a user account identified by the user-specifying data, to a prescribed transmission destination; and
requesting the transmission of content associated with a user account specified by the user-specifying data.

29. A recording medium capable of being read by computers used for data access and storing a computer program instructing the computer to execute the steps of:
receiving a broadcast signal;
playing broadcast content included in the broadcast signal;
transmitting an association request, including user-specifying data and content-specifying data, and requesting that the content specified by the content-specifying data be associated to a user account identified by the user-specifying data, to a prescribed transmission destination; and
requesting the transmission of content associated with a user account specified by the user-specifying data.

30. A data provision method comprising the steps of:
transmitting a broadcast signal including broadcast content;
storing the broadcast content included in the broadcast signal or content related to the broadcast content in association with content-specifying data specifying the broadcast content or related content;
receiving an association request transmitted from a user device, the association request including user-specifying data and content-specifying data and requesting that the content specified by the content-specifying data be associated to a user account identified by the user-specifying data;
associating content specified by the content-specifying data to a user account based on the user-specifying data; and
transmitting content associated with a user account from the content storing means to the user device based on a content transmission request sent from a user device.
